# EUROPEAN PATENT SPECIFICATION

(11) **EP 3 611 377 B1**
(45) Date of publication and mention of the grant of the patent: **03.07.2024**
(21) Application number: 18784451.9
(22) Date of filing: 13.04.2018
(51) Int. Cl.: F04B 39/16, F04B 39/02, F04B 39/04, F04B 41/00, F04B 41/02, F04B 49/02, B60G 11/27, B60T 17/00

(54) **AIR SUPPLY CIRCUIT**
LUFTVERSORGUNGSKREISLAUF
CIRCUIT DE DISTRIBUTION D'AIR

(30) Priority: 13.04.2017 JP 2017079954
(43) Date of publication of application: 19.02.2020
(73) Proprietor: Nabtesco Automotive Corporation, Tokyo 102-0093 (JP)
(72) Inventor: TANAKA, Katsunori, Tokyo 102-0093 (JP)
(74) Representative: Grünecker Patent- und Rechtsanwälte PartG mbB
(86) International application number: PCT/JP2018/015529
(87) International publication number: WO 2018/190418

(56) References cited:
- JP-A- S6 335 837
- JP-A- S60 104 786
- JP-A- S63 106 377
- JP-A- 2008 279 370
- JP-A- 2014 148 902
- US-A- 4 764 189
- US-A1- 2015 258 492

## Description

### TECHNICAL FIELD

The present invention relates to an air supply circuit that removes impurities from compressed air.

### BACKGROUND ART

Vehicles such as trucks, buses, and construction machines use compressed air sent from a compressor to control air pressure systems such as brakes and suspensions. The compressed air contains liquid impurities such as water contained in the atmosphere and oil lubricating the interior of the compressor. When compressed air containing a large amount of water and oil enters an air pressure system, the water and oil will produce rust or swelling of rubber members thereby causing operational failure. Thus, a compressed air drying device that removes impurities such as water and oil from the compressed air is arranged downstream from the compressor.

The compressed air drying device performs a loading operation (dehumidification) that removes oil and water and an unloading operation (regeneration) that extracts the oil and water adsorbed by a desiccant and releases the oil and water as drainage. An air dryer discharges the drainage to an oil separator to prevent the drainage from being discharged onto the road. In the oil separator, air containing oil and water strikes baffle members and separates into gas and liquid so that the oil separator collects oil and discharges clean air (refer to Patent Document 1).

Further examples of air supply circuits are disclosed in JP S63 35837 B2 and JP 2008 279 370 A.

### PRIOR ART DOCUMENT

### Patent Document

Patent Document 1: Japanese Laid-Open Patent Publication No. 2013-234632

### SUMMARY OF THE INVENTION

### Problems that the Invention is to solve

When the trapped oil and dust or the like accumulates in the desiccant, the performance of the desiccant will deteriorate in the compressed air drying device. Thus, the compressed air drying device may not sufficiently remove water from the passing air. Although the compressed air drying device restores the function for removing water by performing a regeneration process that removes water from the desiccant, it is difficult for the regeneration process to remove the accumulated oil and regenerate the desiccant when the desiccant deteriorates.

Such a problem is not limited to air supply circuits installed in vehicles but also occurs in air supply circuits applied to compressed air drying devices.

It is an objective of the present invention to provide an air supply circuit that limits deterioration of the performance of the compressed air drying device.

### Means for solving the problems

The present invention, solving the above problem, is defined in independent claim 1. Preferred embodiments are laid down in the dependent claims.

According to the present invention, the control valve is at the discharge position until a predetermined time elapses from when the compressor switches from the idle operation to the load operation to restart the supply of compressed air. Thus, immediately after the compressor switches to the load operation, compressed air is discharged through the discharge port without being supplied to the desiccant. Then, after the predetermined time elapses from when the control valve is shifted to the connection position, compressed air is supplied to the desiccant. Thus, liquid impurities such as oil and water that collect in the air compression chamber of the compressor during an idle operation are readily discharged when the supply of compressed air is restarted. The compressed air containing such impurities is discharged through the discharge port. Subsequently, the compressed air supplied to the desiccant does not contaminate the desiccant. This restricts functional deterioration.

In the air supply circuit, the generation circuit may preferably include an orifice and a volume chamber arranged between the orifice and the control valve.

With such a configuration, the time when an air pressure signal is sent to the control valve is delayed by delaying the change in pressure of the air pressure signal. This maintains the control valve at the discharge position until a predetermined time elapses from when the compressor switches to the load operation.

In the air supply circuit, the orifice may preferably be connected in parallel with a check valve that allows air to flow in a direction from the instruction unit toward the volume chamber.

With such a configuration, when the compressor switches to an idle operation, the control valve is promptly switched to the discharge position without any delay.

In the air supply circuit, the desiccant and the instruction unit may preferably be arranged in an air-drying device, and the generation circuit and the control valve may preferably be arranged between the compressor and the air-drying device.

With such a configuration, the generation circuit and the control valve are arranged between the compressor and the air-drying device. Thus, the limitation is small on the arrangement of the generation circuit and the control valve.

In the air supply circuit, the generation circuit may preferably include an orifice and a check valve that is connected in parallel with the orifice and allows air to flow in a direction from the instruction unit toward the control valve.

With such a configuration, when the instruction unit outputs an air pressure signal and the compressor switches to an idle operation, the control valve is promptly switched to the discharge position without any delay.

In the air supply circuit, the desiccant, the instruction unit, the generation circuit, and the control valve may preferably be arranged in the air-drying device.

With such a configuration, the air-drying device includes the generation circuit and the control valve. This facilitates the arrangement of the air supply circuit.

In the air supply circuit, the air-drying device may preferably include a discharge valve that discharges air that has passed through the desiccant in a direction from the desiccant toward the compressor when regenerating the desiccant, and the air-drying device may preferably use the discharge valve as the control valve.

With such a configuration, convenience is improved because the discharge valve is used as the control valve.

In the air supply circuit, the predetermined time may preferably be set to be longer than or equal to a period of time that is necessary for discharging compressed air, which is sent out from the compressor immediately after the compressor shifts from the idle operation to the load operation, from the discharge port.

With such a configuration, after the compressor switches to the load operation, compressed air containing a large amount of impurities is discharged immediately after the switching.

### EFFECTS OF THE INVENTION

According to the present invention, deterioration of the performance of a compressed air drying device is limited.

### BRIEF DESCRIPTION OF THE DRAWINGS

Fig. 1 is a schematic circuit diagram showing the configuration of an air supply circuit according to a first embodiment of the air supply circuit.
Fig. 2 is a schematic circuit diagram showing the configuration of the air supply circuit in Fig. 1.
Fig. 3 is a schematic circuit diagram showing the configuration of the air supply circuit in Fig. 1.
Fig. 4 is a schematic circuit diagram showing the configuration of an air supply circuit according to a second embodiment of the air supply circuit.
Fig. 5 is a schematic circuit diagram showing the configuration of the air supply circuit in Fig. 4.
Fig. 6 is a schematic circuit diagram showing the configuration of the air supply circuit in Fig. 4.
Fig. 7 is a schematic circuit diagram showing the configuration of an air supply circuit according to another embodiment of the air supply circuit.
Fig. 8 is a schematic circuit diagram showing the configuration of an air supply circuit according to another embodiment of the air supply circuit.
Fig. 9 is a schematic circuit diagram showing the configuration of an air supply circuit according to another embodiment of the air supply circuit.
Fig. 10 is a schematic circuit diagram showing the configuration of an air supply circuit according to another embodiment of the air supply circuit.
Fig. 11 is a schematic circuit diagram showing the configuration of an air supply circuit according to another embodiment of the air supply circuit.
Fig. 12 is a schematic circuit diagram showing the configuration of an air supply circuit according to another embodiment of the air supply circuit.
Fig. 13 is a schematic circuit diagram showing the configuration of an air supply circuit according to another embodiment of the air supply circuit.
Fig. 14 is a schematic circuit diagram showing the configuration of an air supply circuit according to another embodiment of the air supply circuit.

### MODES FOR CARRYING OUT THE INVENTION

### First Embodiment

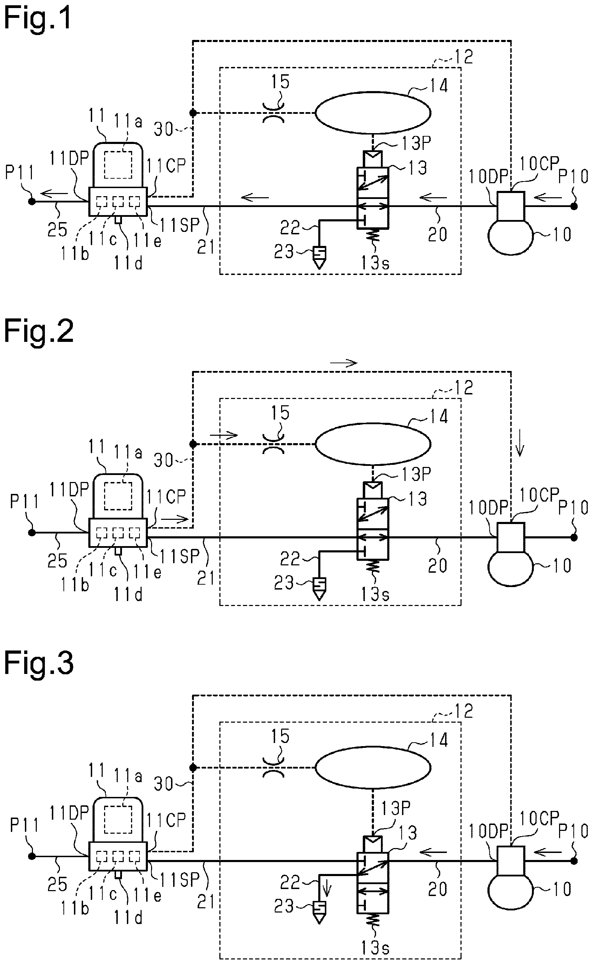

A first embodiment of an air supply circuit will now be described with reference to Figs. 1 to 3. The air supply circuit is installed in automobiles such as trucks, buses, and construction machines.

As shown in Fig. 1, the air supply circuit includes a compressor 10 that supplies compressed air, an air dryer 11, which serves as an air-drying device, and a discharging device 12. The air dryer 11 of the air supply circuit removes oil and water from compressed air that is supplied from a supply port 10DP of the compressor 10 and stores dry compressed air, which is air that is dry and compressed, in an air tank (not shown) through a port P11. The air supply circuit supplies the dry compressed air stored in the air tank (not shown) to a brake, suspensions, or the like. In the description of the present embodiment, the compressor 10 is located at an upstream side, and the port P11, which is connected to the air tank, is located at a downstream side.

The compressor 10 draws in air from a port P10 and compresses the drawn air to generate compressed air. The compressor 10, which includes the supply port 10DP to output the compressed air, supplies the compressed air from the supply port 10DP via the discharging device 12 to the air dryer 11. The air dryer 11 removes oil and water from the compressed air that the compressor 10 outputs from the supply port 10DP.

Operation of the compressor 10 is switched between a load operation, which is an operation that generates compressed air and outputs the compressed air from the supply port 10DP, and an idle operation, which is an operation that does not generate compressed air or does not output compressed air from the supply port 10DP. That is, the compressor 10 is configured to selectively perform the load operation and the idle operation. The compressor 10 includes a signal input port 10CP. The compressor 10 performs the load operation when an unloading signal, which serves as a first signal, is not input to the signal input port 10CP, and the idle operation when an unloading signal is input to the signal input port 10CP. The unloading signal is an air pressure signal, more specifically, a signal using air pressure that is greater than or equal to a predetermined pressure. When the "unloading signal is not input," this means that the air pressure input to the signal input port 10CP is less than the predetermined pressure such as atmospheric pressure. The predetermined pressure is set in a range that is greater than the atmospheric pressure and less than the pressure of compressed air generated by the compressor 10.

The air dryer 11 includes an upstream port 11SP to which compressed air is supplied (input) and a downstream port 11DP from which compressed air is supplied (output). The air dryer 11 also includes an air pressure signal output port 11CP that outputs an unloading signal to the compressor 10 as the air pressure signal, which indicates the necessity for the supply of compressed air. The upstream port 11SP of the air dryer 11 is supplied with compressed air from the compressor 10 through conduits 20, 21 and the like. The air dryer 11 supplies dry compressed air from the downstream port 11DP to the air tank through the conduit 25. The conduit 25 connects the air dryer 11 to the air tank through the port P11. The air tank is connected to the pneumatic system of an automobile such as a brake system, a suspension system, and the like.

The air dryer 11 includes a desiccant 11a, a check valve 11b, a regeneration control valve 11c, a drain valve 11d, which serves as a discharge valve, and a governor 11e, which serves as an instruction unit.

The check valve 11b is arranged at the downstream side in the air dryer 11 and allows dry compressed air to be supplied from the air dryer 11 to the air tank if the pressure at the air tank is less than or equal to a set pressure. The check valve 11b stops the supply of dry compressed air from the air dryer 11 to the air tank if the pressure at the air tank is greater than the set pressure.

The governor 11e supplies a predetermined air pressure signal as an unloading signal to the compressor 10 if the pressure at the conduit 25 between the governor 11e and the air tank is greater than or equal to an upper limit value. In other words, if enough air is stored in the air tank, the air dryer 11 outputs an unloading signal to an air pressure signal channel 30 so that the output unloading signal is input to the compressor 10. If air is lacking in the air tank, the air dryer 11 stops outputting the unloading signal to the air pressure signal channel 30. Thus, the unloading signal of high air pressure is not input to the compressor 10.

The governor 11e also outputs an unloading signal to the drain valve 11d of the air dryer 11. The drain valve 11d opens when the unloading signal is input and closes when the unloading signal is not input. When the drain valve 11d is open, air flows through the air dryer 11 in a "regeneration direction" that is opposite to a "purification direction" in which air flows for purification. Compressed air flows from the upstream side to the downstream side in the "purification direction" and the compressed air flows from the downstream side to the upstream side in the "regeneration direction."

The regeneration control valve 11c forms an air circuit that bypasses the check valve 11b for a fixed period of time in response to the output of an unloading signal. This allows compressed air to flow back from the air tank in the "regeneration direction" through the desiccant 11a. The regeneration control valve 11c is usually closed and compressed air flows through the check valve 11b only in the "purification direction." When the unloading signal is input, the regeneration control valve 11c opens and allows the compressed air to flow in the "regeneration direction."

The drain valve 11d discharges impurities, which are trapped in the desiccant 11a, as drainage together with compressed air flowing in the "regeneration direction" to regenerate (clean) the desiccant 11a. The end of the drain valve 11d is open to the atmosphere. The drain valve 11d is usually closed and does not discharge compressed air. However, when an unloading signal is input, the drain valve 11d opens to discharge the compressed air flowing back through the desiccant 11a from the air tank.

The operation of the compressor 10 based on an air pressure signal from the air dryer 11 will now be described.

The compressor 10 receives an air pressure signal from the air dryer 11 via the air pressure signal channel 30, which is connected to the air pressure signal output port 11CP of the air dryer 11. The air dryer 11 outputs an unloading signal as an air pressure signal from the air pressure signal output port 11CP if the amount of compressed air in the air tank is sufficient and there is no need to supply compressed air to the air tank. The compressor 10 switches to an idle operation in response to the unloading signal and shifts to a state in which the compressor 10 does not supply compressed air to the air dryer 11. The air dryer 11 does not output an unloading signal from the air pressure signal output port 11CP if the amount of compressed air in the air tank is insufficient and compressed air needs to be supplied to the air tank. The compressor 10 switches to a load operation if an unloading signal is not output and shifts to a state in which the compressor 10 supplies compressed air to the air dryer 11.

The discharging device 12 will now be described.

The discharging device 12 includes an air pressure control valve 13 and a series circuit of an orifice 15 and a volume chamber 14. The pressure control valve 13 is arranged between the conduits 20, 21, through which compressed air flows. The series circuit branches from the air pressure signal channel 30. In the present embodiment, the series circuit of the orifice 15 and the volume chamber 14 forms a generation circuit.

The air pressure control valve 13 is a three-port, two-position valve controlled by an air pressure signal. The air pressure control valve 13 is arranged between the conduit 20, which is connected to the supply port 10DP of the compressor 10, and the conduit 21, which is connected to the port 11SP of the air dryer 11. The upstream side of the air pressure control valve 13 is connected to the compressor 10 via the upstream conduit 20, and the downstream side is connected to the air dryer 11 via the conduit 21. The air pressure control valve 13 is also connected to a discharge port 23 via a discharge passage 22. The air pressure control valve 13 is configured to selectively switch to two positions, namely, a discharge position where the air pressure control valve 13 disconnects the downstream conduit 21 and connects the upstream conduit 20 to the downstream discharge passage 22 and a connection position where the air pressure control valve 13 connects the upstream conduit 20 to the downstream conduit 21. The air pressure control valve 13 is biased by a valve spring 13s toward the connection position. Thus, the air pressure control valve 13 is arranged at the connection position when pressure corresponding to an unloading signal is not input to a signal input port 13P, and the air pressure control valve 13 is arranged at the discharge position when pressure that corresponds to the unloading signal is input to the signal input port 13P.

The signal input port 13P of the air pressure control valve 13 is connected to the air pressure signal channel 30 via the orifice 15 and the volume chamber 14. Specifically, the air pressure signal channel 30, the orifice 15, the volume chamber 14, and the air pressure control valve 13 are arranged in this order. As described above, the air pressure signal channel 30 is a conduit through which an unloading signal is sent to the compressor 10. Thus, an unloading signal output from the air pressure signal output port 11CP of the air dryer 11 is sent through the air pressure signal channel 30 to the orifice 15 and the volume chamber 14. In other words, the signal input port 13P of the air pressure control valve 13 receives a second signal that serves as an air pressure signal and is generated based on the unloading signal by the orifice 15 and the volume chamber 14. In this case, the orifice 15 lowers the responsiveness to an unloading signal in order to limit the flow rate of air and delay raises in the air pressure of the generated second signal. Further, the volume chamber 14 lowers the responsiveness to an unloading signal by delaying raises in the air pressure so that the generation of the second signal in response is delayed. In the present embodiment, the time at which the air pressure control valve 13 is operated after the unloading signal is output in response to the second signal is delayed by a predetermined time in which a change in the air pressure of the second signal is delayed by the orifice 15 and the volume chamber 14. In the present embodiment, the predetermined time in which a change in the air pressure of the second signal is delayed by the orifice 15 and the volume chamber 14 corresponds to the predetermined time delay.

The operation of the air supply circuit according to the present embodiment will now be described with reference to Figs. 1 to 3.

Fig. 1 shows a case in which the air dryer 11 does not output an unloading signal.

The compressor 10 performs a load operation because an unloading signal is not input to the signal input port 10CP. The compressor 10 generates compressed air by compressing air drawn through the port P10 and outputs the compressed air to the conduit 20 from the supply port 10DP. The air pressure control valve 13 is at the connection position because an unloading signal is not input and a predetermined time or longer has elapsed from when an unloading signal was stopped. The conduit 20 is connected to the conduit 21 so that the compressed air is supplied from the conduit 20 to the conduit 21. The compressed air is supplied to the port 11SP of the air dryer 11, which is connected to the conduit 21. In this case, the governor 11e does not output an unloading signal. Thus, the air dryer 11 supplies dry compressed air, which has passed through the desiccant 11a via the check valve 11b, from the port 11DP to the air tank via the conduit 25.

Fig. 2 shows a case in which an unloading signal is output from the air dryer 11 and a predetermined time has not elapsed from when the unloading signal was output.

The compressor 10 performs an idle operation because an unloading signal is input to the signal input port 10CP. That is, compressed air is not output from the supply port 10DP to the conduit 20. When a predetermined time has not elapsed from when the unloading signal was output from the air dryer 11, the air pressure control valve 13 is at the connection position and connects the conduit 20 to the conduit 21. This is because the orifice 15 and the volume chamber 14 delays the time at which the air pressure input to the signal input port 13P shifts to an air pressure that corresponds to the unloading signal by a predetermined period of time. Further, the compressor 10 does not output compressed air so that compressed air is not supplied from the conduit 20 to the conduit 21. Compressed air is not supplied to the port 11SP of the air dryer 11, which is connected to the conduit 21. In this case, the unloading signal is output from the governor 11e. Thus, the air dryer 11 can discharge the compressed air from the compressor 10 through the drain valve 11d and discharge the compressed air that flows back from the air tank and passes through the desiccant 11a to undergo the "regeneration process" for a fixed period of time during which the regeneration control valve 11c is in operation.

When the predetermined time elapses from when the unloading signal is output, the air pressure input to the signal input port 13P of the air pressure control valve 13 becomes the same as the pressure of the unloading signal. This switches the air pressure control valve 13 to the discharge position and connects the conduit 20 to the discharge port 23 via the discharge passage 22.

Fig. 3 shows a case in which the output of an unloading signal from the air dryer 11 is stopped and a predetermined time has not elapsed from when the output of the unloading signal was stopped.

The compressor 10 switches from an idle operation to a load operation because the unloading signal is no longer input to the signal input port 10CP, and the compressor 10 outputs compressed air from the supply port 10DP to the conduit 20. Even if the output of the unloading signal is stopped, the time at which the air pressure is lowered is delayed by a predetermined time so that the signal input port 13P continues to receive air pressure that corresponds to the unloading signal and the air pressure control valve 13 is at the discharge position over the predetermined time of the delay. Thus, the conduit 20 is connected to the discharge port 23 via the discharge passage 22. In this case, the compressor 10 outputs compressed air so that the compressed air supplied from the compressor 10 to the conduit 20 is discharged from the discharge port 23 via the discharge passage 22 over the predetermined time.

The rise in pressure of an air compression chamber of the compressor 10 restricts entry of oil and water into the air compression chamber during a load operation. During an idle operation, the pressure of the air compression chamber of the compressor 10 is the atmospheric pressure. Thus, the entry of oil and water into the air compression chamber is not restricted. Thus, oil and water may collect in the air compression chamber during the idle operation. Thus, until the predetermined time elapses from when switching from the idle operation to the load operation, the compressed air supplied from the compressor 10 may contain more oil and water than that contained in the compressed air supplied when the load operation is performed continuously after the predetermined time, namely, when the output is steady. In this respect, according to the present embodiment, after the compressor 10 is switched from the idle operation to the load operation, the conduit 20 remains connected to the discharge port 23 via the discharge passage 22 until the predetermined time elapses. This discharges compressed air that may contain a large amount of oil and water and prevents such compressed air from being supplied to the desiccant 11a of the air dryer 11 to restrict the adsorption of the large amount of oil and water from the compressed air in the desiccant 11a. An increase in the adsorption amount of oil and water deteriorates the desiccant 11a. Thus, deterioration in the function of the desiccant 11a can be limited thereby extending the life of the desiccant 11a by stopping the supply of compressed air containing a large amount of oil and water. That is, the predetermined time is set to be longer than or equal to the period of time that is necessary for discharging compressed air that contains a large amount of impurities immediately after restarting output. In other words, the predetermined time is set to be longer than or equal to the period of time that is necessary for discharging compressed air that contains more impurities such as oil and water than the compressed air supplied when the output is steady. Thus, after the compressor 10 switches to a load operation, compressed air containing a large amount of impurities will be discharged immediately after the switching.

When the predetermined time elapses, the signal input port 13P of the air pressure control valve 13 receives the air pressure that corresponds to that when the output of an unloading signal passing through the orifice 15 and the volume chamber 14 is stopped. This shifts the air pressure control valve 13 to the connection position. Thus, the conduit 20 is connected to the conduit 21, and compressed air is supplied to the air dryer 11 via the conduit 21.

As described above, the present embodiment has the following advantages.
(1) The air pressure control valve 13 is at the discharge position until a predetermined time elapses from when the compressor 10 switches from the idle operation to the load operation to restart the supply of compressed air. Thus, immediately after the compressor 10 switches to the load operation, compressed air is discharged through the discharge port 23 without being supplied to the desiccant 11a. Then, after the predetermined time elapses from when the air pressure control valve 13 is shifted to the connection position, compressed air is supplied to the desiccant 11a. Thus, liquid impurities such as oil and water that collect in the air compression chamber of the compressor 10 during an idle operation are readily discharged when the supply of compressed air is restarted. The compressed air containing such impurities is discharged through the discharge port 23. Subsequently, the compressed air supplied to the desiccant 11a does not contaminate the desiccant 11a. This restricts functional deterioration.
(2) The time when an air pressure signal is sent to the air pressure control valve 13 is delayed by delaying the change in pressure of the air pressure signal. This maintains the air pressure control valve 13 at the discharge position until a predetermined time elapses from when the compressor 10 switches to the load operation.
(3) A predetermined time is set to be longer than or equal to the period of time that is necessary for discharging compressed air containing a large amount of impurities immediately after restarting output. Thus, after the compressor 10 switches to the load operation, compressed air containing a large amount of impurities is discharged immediately after the switching.
(4) The air pressure control valve 13, the volume chamber 14, and the orifice 15 can be arranged between the compressor 10 and the air dryer 11. Thus, the limitation is small on the arrangement of the air pressure control valve 13, the volume chamber 14, or the orifice 15.

### Second Embodiment

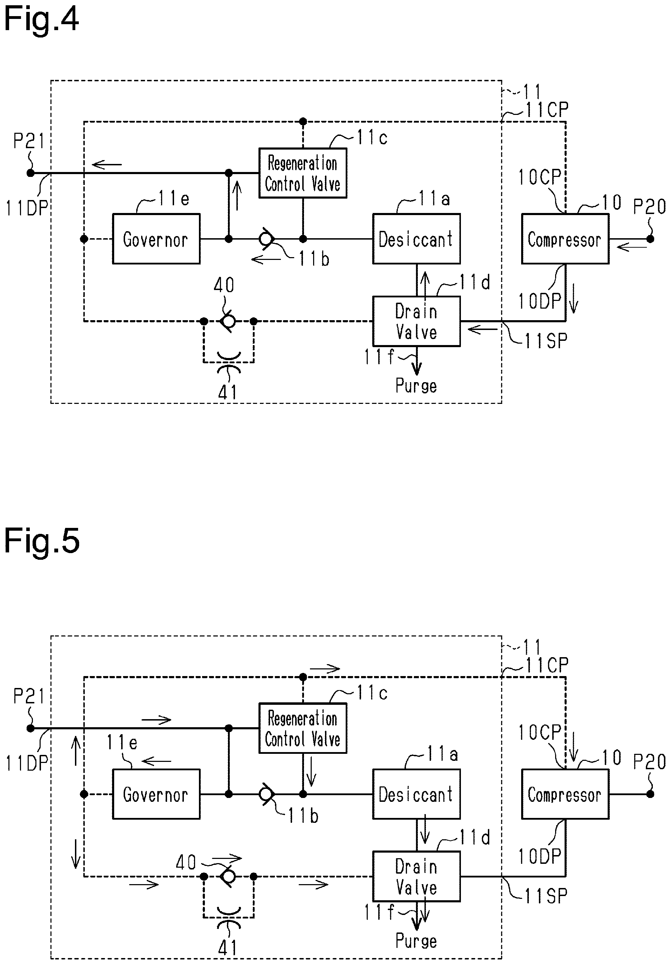

A second embodiment of an air supply circuit will now be described with reference to Figs. 4 to 6. The second embodiment differs from the first embodiment in that the functions of the air pressure control valve 13 and the like in the first embodiment are assigned to the drain valve 11d of the air dryer 11. For the sake of brevity, like or the same reference numerals are given to those components that are like or the same as the corresponding components of the first embodiment. Such components will not be described in detail.

The compressor 10 draws in air from a port P20 and compresses the drawn air to generate compressed air. The compressor 10 outputs the compressed air through the supply port 10DP and supplies the compressed air to the air dryer 11. The air dryer 11 removes oil and water from the compressed air of the compressor 10 output through the supply port 10DP.

The air dryer 11 includes the desiccant 11a, the check valve 11b, the regeneration control valve 11c, the drain valve 11d serving as an air pressure control valve and a discharge valve, and the governor 11e.

The air dryer 11 sends compressed air received through the port 11SP to the desiccant 11a via the drain valve 11d and outputs dry compressed air that has passed through the desiccant 11a via the check valve 11b and the port 11DP to a port P21 that is connected to the air tank (not shown).

The drain valve 11d sends compressed air input through the port 11SP to the desiccant 11a if an unloading signal, which serves as a first signal, is not input from the governor 11e. If an unloading signal is input, the drain valve 11d purges (discharges) compressed air, which is input through the port 11SP, from a discharge port 11f.

The governor 11e outputs an unloading signal to the compressor 10 if the pressure between the governor 11e and the air tank is greater than or equal to an upper limit value. If the pressure between the governor 11e and the air tank is less than the upper limit value, the governor 11e does not output an unloading signal by, for example, stopping the output of the unloading signal.

The governor 11e also outputs an unloading signal to the regeneration control valve 11c. The regeneration control valve 11c is normally closed. However, the regeneration control valve 11c opens an air circuit bypassing the check valve 11b for only a fixed period of time in response to the input of the unloading signal. This allows a regeneration process to be performed so that compressed air flows back from the air tank to the desiccant 11a.

The governor 11e also outputs an unloading signal to the drain valve 11d of the air dryer 11. The drain valve 11d is open when an unloading signal is input and closed when the unloading signal is not input. When the drain valve 11d opens, air flows through the air dryer 11 in the "regeneration direction" that is opposite to the "purification direction."

In the second embodiment, a parallel circuit of a check valve 40 and an orifice 41 is arranged between the governor 11e and the drain valve 11d. In the second embodiment, the orifice 41 forms a generation circuit. The check valve 40 allows an air pressure signal to be sent in a direction from the governor 11e to the drain valve 11d and does not allow an air pressure signal to be sent in the opposite direction. The orifice 41 lowers the responsiveness to an air pressure signal by restricting the flow rate of air and delays a response. That is, when an unloading signal is output from the governor 11e, an air pressure signal generated as a second signal based on the unloading signal passes through the check valve 40 and is immediately input to the drain valve 11d to switch the drain valve 11d to the discharge position. If the output of an unloading signal from the governor 11e is stopped and pressure at the governor 11e is decreased, the air pressure of the second signal at the drain valve 11d is sent in a direction from the orifice 41 to the governor 11e without passing through the check valve 40. Thus, the decrease in the air pressure of the second signal is delayed for a predetermined time at the drain valve 11d and the drain valve 11d is maintained at the discharge position until the predetermined time elapses. Then, the drain valve 11d is switched to the connection position.

An operation of the air supply circuit according to the second embodiment will now be described with reference to Figs. 4 to 6.

Fig. 4 shows a case in which the governor 11e does not output an unloading signal.

The compressor 10 performs a load operation when an unloading signal is not input to the signal input port 10CP. The compressor 10 compresses air drawn through the port P20 into compressed air and outputs the compressed air through the supply port 10DP to the port 11SP of the air dryer 11. The governor 11e of the air dryer 11 does not output an unloading signal, and the drain valve 11d is at the connection position that connects the port 11SP to the desiccant 11a. Thus, the air dryer 11 supplies dry compressed air, which has passed through the desiccant 11a, via the check valve 11b, the port 11DP, and the port P21 to the air tank.

Fig. 5 shows a case in which the governor 11e outputs an unloading signal.

The compressor 10 performs an idle operation and does not generate compressed air because an unloading signal is input to the signal input port 10CP. Since the unloading signal is input, the drain valve 11d is at the discharge position and compressed air supplied to the port 11SP is purged from the discharge port 11f. The compressor 10 does not output compressed air. Thus, compressed air is not supplied to the port 11SP of the drain valve 11d. The air dryer 11 discharges the compressed air that flows back from the air tank and passes through the desiccant 11a to undergo the "regeneration process" for a fixed period of time during which the regeneration control valve 11c is in operation.

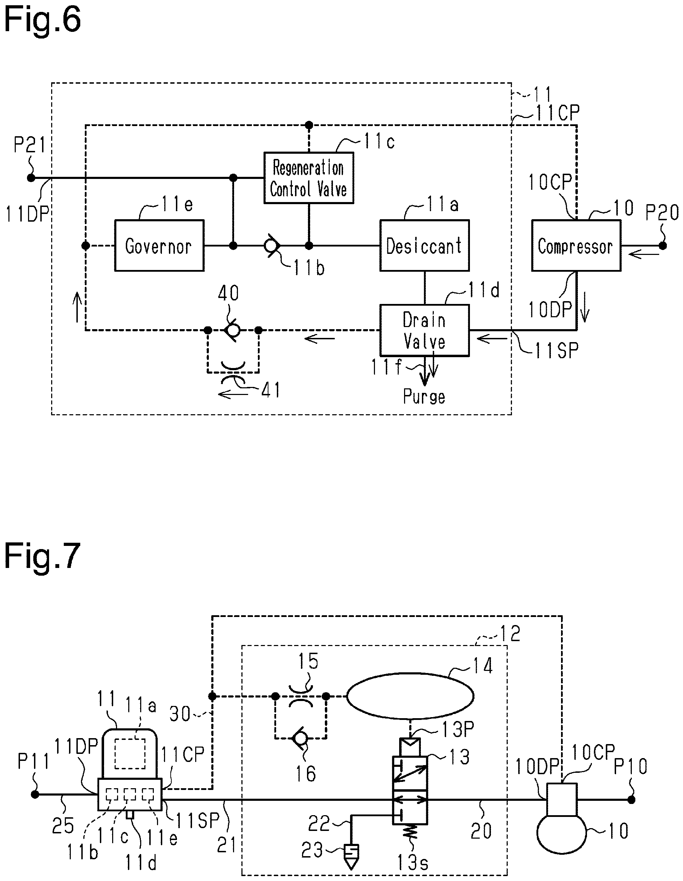

Fig. 6 shows a case in which the output of an unloading signal from the governor 11e is stopped and a predetermined time has not elapsed from when the output of the unloading signal was stopped.

The compressor 10 switches from the idle operation to the load operation because an unloading signal is no longer input to the signal input port 10CP, and the compressor 10 outputs compressed air from the supply port 10DP to the port 11SP of the air dryer 11. Although the output of an unloading signal for the drain valve 11d is stopped, the orifice 41 arranged in parallel with the check valve 40 delays a decrease in the air pressure applied by the unloading signal so that the signal input port of the drain valve 11d continues to receive the air pressure that corresponds to the unloading signal until the delay of the predetermined time elapses. Thus, the drain valve 11d is at the discharge position until a predetermined time elapses from when the unloading signal is stopped, and the port 11SP is connected to the discharge port 11f. This discharges the compressed air, which is supplied from the compressor 10, through the discharge port 11f from the drain valve 11d without sending the compressed air to the desiccant 11a. The drain valve 11d discharges the compressed air until the predetermined time elapses after switching from the idle operation to the load operation. The compressed air immediately after the switching may contain more oil and water than when the load operation has been continuously performed. In other words, compressed air that may contain a large amount of oil and water is not supplied to the desiccant 11a of the air dryer 11. This reduces the amount of oil and water adsorbed in the desiccant 11a.

When the predetermined time elapses, the air pressure input to the signal input port of the drain valve 11d is changed to the air pressure corresponding to that when the unloading signal that passes through the orifice 41 is stopped. This switches the drain valve 11d to the connection position and supplies the compressed air, which is supplied to the port 11SP, via the desiccant 11a to the port P21.

As described above, the present embodiment has the following advantages in addition to advantages (1) to (4) of the first embodiment.
(5) When the compressor 10 switches to an idle operation, the drain valve 11d is promptly switched to the discharge position without any delay.
(6) The air dryer 11 includes the orifice 41 and the drain valve 11d, which serves as an air pressure control valve. This facilitates the arrangement of the air supply circuit.
(7) Convenience is improved because the drain valve 11d serves as the air pressure control valve.

### Other Embodiments

The above described embodiments may be modified as follows.

In the first embodiment, the air pressure control valve 13 is arranged between the compressor 10 and the desiccant 11a. Instead, the air pressure control valve may be arranged between the compressor 10 and the desiccant 11a as long as compressed air is not supplied from the compressor to the desiccant over a predetermined time from when switching from an idle operation to a load operation.

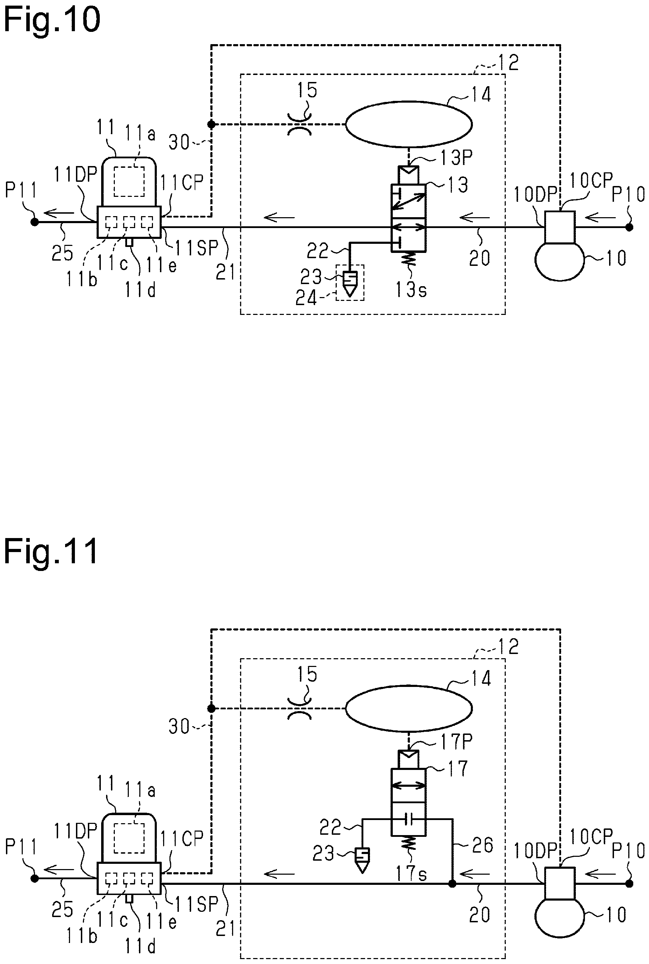

As shown in Fig. 11, the conduits 20, 21, through which compressed air flows, may be directly connected, and a branch pipe 26 of the conduits 20, 21 may be connected to an air pressure control valve 17 inside the discharging device 12. In other words, the air pressure control valve 17 is connected to a location between the compressor 10 and the desiccant 11a.

The air pressure control valve 17 is a two-port, two-position valve that is controlled based on an air pressure signal. The upstream side of the air pressure control valve 17 is connected to the branch pipe 26, and the downstream side is connected to the discharge port 23 via the discharge passage 22. The air pressure control valve 17 is configured to selectively switch between two positions, namely, a discharge position that connects the branch pipe 26 to the downstream discharge passage 22 and a connection position that disconnects the branch pipe 26 and the discharge passage 22 to close the branch pipe 26. In other words, the connection position connects the compressor 10 to the desiccant 11a so as to supply compressed air to the desiccant 11a, and the discharge position connects the compressor 10 to the discharge port 23 so as not to supply compressed air to the desiccant 11a. The air pressure control valve 17 is biased by a valve spring 17s toward the connection position. This arranges the air pressure control valve 17 at the connection position when pressure that corresponds to an unloading signal is not input to a signal input port 17P and at the discharge position when pressure that corresponds to the unloading signal is input.

In the further embodiment described above, the discharging device 12 may be an oil mist separator.

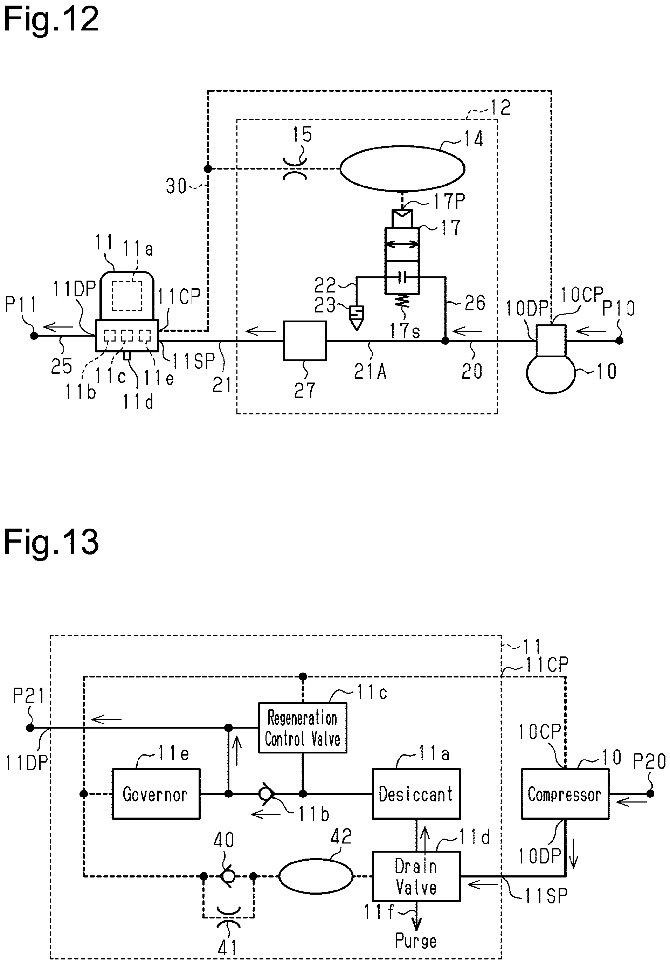

As shown in Fig. 12, the discharging device 12 includes conduits 20, 21A connected to the compressor 10, an oil removal filter 27 connected to the air dryer 11 via the conduit 21, and the air pressure control valve 17 connected to the conduit 20 via the branch pipe 26. The oil removal filter 27 separates gas and liquid when compressed air strikes the oil removal filter 27 to trap the oil contained in compressed air sent from the compressor 10. The oil removal filter 27 may be formed from a compression-molded metal material or a porous material such as sponge. The air pressure control valve 17 does not supply the desiccant with the compressed air from the compressor 10 over a predetermined time from when switching from an idle operation to a load operation to discharge the oil and water contained in the compressed air. As a result, the oil mist separator removes oil and water in a more preferred manner.

In the above embodiments, the compressor 10, the air pressure control valve 13, the regeneration control valve 11c and the drain valve 11d serve as control valves or the like that actuate in response to the input of air pressure. Instead, at least one of the compressor, the air pressure control valve, the regeneration control valve, and the drain valve may be an electromagnetic control valve or the like actuated in response to an electric signal.

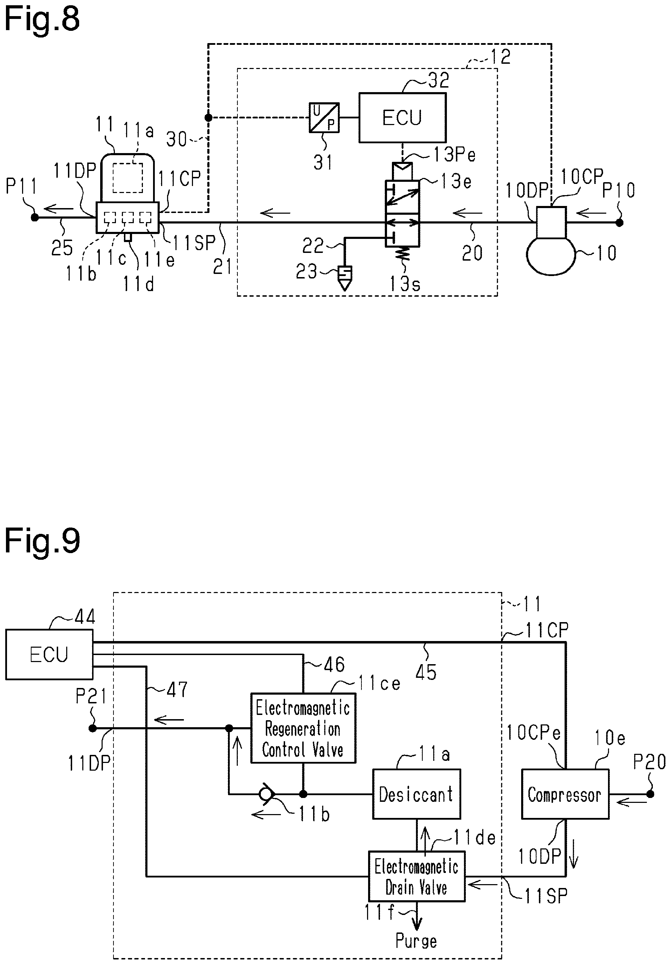

As shown in Fig. 8, for example, the air pressure control valve 13 in the first embodiment may be replaced with an electromagnetic control valve 13e. An unloading signal, which serves as a first signal, may be input to an electronic control unit (ECU) 32 via a pressure gauge 31, and a second signal, which is generated in response to the input first signal, may be input as an electric signal to a port 13Pe of the electromagnetic control valve 13e. In this case, the ECU 32 may promptly output the second signal if the unloading signal is detected. If the unloading signal is not detected, the ECU 32 may stop the second signal after delay of a predetermined time from when the unloading signal is no longer detected. This allows compressed air to be discharged from the discharge port 23 for a predetermined time from when the compressor 10 starts a load operation.

Further, as shown in Fig. 9, for example, the compressor 10, the regeneration control valve 11c, and the drain valve 11d in the second embodiment may be replaced with a compressor 10e controlled by electric signals, an electromagnetic regeneration control valve 11ce, and an electromagnetic drain valve 11de. In this case, an ECU 44 generates an unloading signal, which serves as a first signal, based on the air pressure monitored at the port P21 and outputs the unloading signal to an input port 10CPe of the compressor 10e via a signal line 45. The ECU 44 also generates a signal for a regeneration process based on the air pressure monitored at the port P21 and outputs the signal to the electromagnetic regeneration control valve 11ce via a signal line 46. The signal for a regeneration process output to the electromagnetic regeneration control valve 11ce via the signal line 46 is stopped when the regeneration process ends. Likewise, the ECU 44 generates a second signal based on the air pressure monitored at the port P21 or the unloading signal, which serves as the first signal, and outputs the generated second signal to the electromagnetic drain valve 11de via a signal line 47. The ECU 44 outputs the second signal simultaneously with the output of the unloading signal and stops the second signal after delay of a predetermined time from when the unloading signal stopped. This allows compressed air to be discharged from a discharge port 11f for a predetermined time since the compressor 10e starts a load operation.

In the configuration shown in Fig. 8, the compressor 10 may be replaced with the compressor 10e, which is controlled by electric signals. Further, the ECU 32 to which an unloading signal is input may generate a first signal with an electric signal and input the signal to the compressor 10e.

The configuration shown in Fig. 9 may further include the governor 11e described in the second embodiment so that the ECU 44 generates an unloading signal (first signal) and a second signal by monitoring the air pressure output by the governor 11e.

In the first embodiment, the air dryer 11 includes the regeneration control valve 11c and the drain valve 11d. However, the regeneration control valve and the drain valve may be removed from the air dryer if a regeneration process is unnecessary.

In the second embodiment, a delay tank 42 may be arranged between the drain valve 11d and the parallel circuit of the check valve 40 and the orifice 41 as shown in Fig. 13. The delay tank 42 lowers the responsiveness to the stopping of the output of an unloading signal by delaying raises in the air pressure and delays the time when the air pressure is lowered over a predetermined period of time.

In the second embodiment, an air pressure signal from the governor 11e is adjusted by the parallel circuit of the check valve 40 and the orifice 41 so that the drain valve 11d is actuated in an appropriate manner. Instead, an ECU and an electromagnetic valve may actuate the drain valve as long as the functions of the governor 11e and functions of the parallel circuit of the check valve 40 and the orifice 41 are provided.

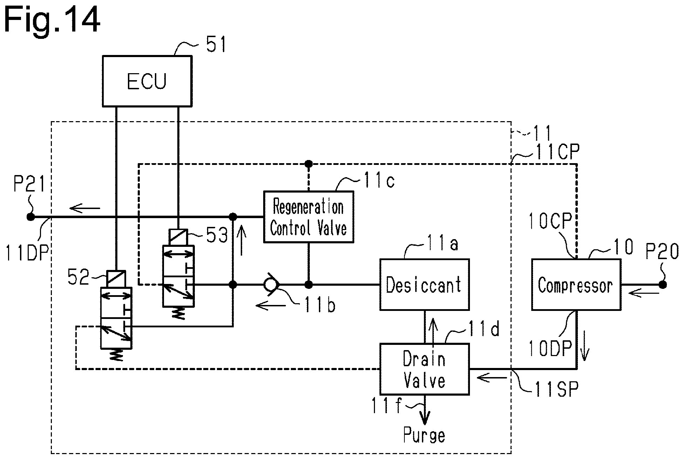

As shown in Fig. 14, the governor 11e may be replaced with an ECU 51, a first electromagnetic valve 52, and a second electromagnetic valve 53. The ECU 51 generates an unloading signal, which serves as a first air pressure signal, based on the air pressure monitored at the port P21 and outputs the unloading signal to the regeneration control valve 11c and the signal input port 10CP of the compressor 10. Likewise, the ECU 51 generates a second air pressure signal based on the air pressure monitored at the port P21 or the first air pressure signal and outputs the generated second air pressure signal to the electromagnetic drain valve 11de. Specifically, the ECU 51 outputs the second air pressure signal simultaneously with the output of the unloading signal and stops the second air pressure signal after delay of a predetermined time from when the unloading signal was stopped. This allows compressed air to be discharged from a discharge port 11f over a predetermined time from when the compressor 10 starts a load operation.

The above embodiments exemplify cases in which the regeneration control valve 11c opens to form the air circuit that bypasses the check valve 11b for a fixed period of time in response to an output of an unloading signal. That is, the regeneration control valve 11c closes after the fixed period of time. Instead, the regeneration control valve may open in response to the output of an unloading signal and then close at a time when the unloading signal is no longer output, at the same time as a start of a load operation (start of loading) performed by the compressor, or at a time when the air pressure control valve is changed from the discharge position to the connection position.

In the second embodiment, the check valve 40 and the orifice 41 are arranged inside the air dryer 11. Instead, at least one of the check valve or the orifice may be arranged outside the air dryer.

In the first embodiment, the air pressure control valve 13, the orifice 15, and the volume chamber 14 are arranged outside the air dryer 11. Instead, part of the air pressure control valve 13, the orifice 15, and the volume chamber 14 may be arranged inside the air dryer.

The above embodiments exemplify cases in which a predetermined time is set to be longer than or equal to the period of time that is necessary for discharging compressed air containing a large amount of impurities immediately after the output of the compressor 10 restarts. Instead, the predetermined time may be set to be slightly shorter as long as at least some of the compressed air containing a large amount of impurities immediately after the output of the compressor restarts is discharged.

In the first embodiment, the series circuit of the orifice 15 and the volume chamber 14 is a generation circuit. Instead, the generation circuit may be formed only by the orifice or the volume chamber as long as the delay of the predetermined time can be obtained.

Further, the generation circuit may include other configurations as long as the delay of the predetermined time can be obtained in response to the stopping of an unloading signal. At least one of the orifice 15 or the volume chamber 14 may be arranged in parallel with a check valve that allows for a flow in a direction from the air pressure signal channel 30 to the signal input port 13P of the air pressure control valve 13. Accordingly, when the compressor 10 switches to a load operation, the change of the air pressure control valve 13 from the discharge position to the connection position is delayed over the predetermined time. When the compressor 10 is switched to an idle operation, the air pressure control valve 13 is promptly switched to the discharge position.

Specifically, as shown in Fig. 7, the orifice 15 may be arranged in parallel with a check valve 16 that allows for a flow in a direction from the air pressure signal channel 30 to the signal input port 13P of the air pressure control valve 13. Accordingly, while an unloading signal is promptly sent to the volume chamber 14 via the check valve 16, a decrease in the air pressure at the volume chamber 14 is delayed for a predetermined time by the orifice 15 even when the unloading signal is stopped.

In the above embodiments, the drain valve 11d is open to the atmosphere. Instead, the drain valve may be connected to an oil separator that separates drainage from air to store oil and water. The oil separator may be open to the atmosphere to release air from which oil and water are separated.

As shown in Fig. 10, the discharge port 23 in the first embodiment may further include an oil separator 24. The discharge port 11f in the second embodiment may further include an oil separator.

The air supply circuit in the above embodiments is applied to an air supply circuit installed in an automobile. However, the air supply circuit may be applied to other systems as long as the systems purify compressed air sent from a compressor. The air supply circuit may be applied to a movable body other than automobiles such as trains, ships, and airplanes. The air supply circuit may be applied to a system that is installed in a unit other than a movable body and operated using air pressure.

### DESCRIPTION OF REFERENCE NUMERALS

10...compressor, 10CP...signal input port, 10DP...supply port, 11...air dryer, 11a...desiccant, 11b...check valve, 11c...regeneration control valve, 11CP...air pressure signal output port, 11d...drain valve, 11DP...port, 11e...governor, 11f...discharge port, 11SP...port, 12...discharging device, 13...air pressure control valve, 13P...signal input port, 13s...valve spring, 14...volume chamber, 15...orifice, 16...check valve, 20, 21...conduit, 22...discharge passage, 23...discharge port, 25...conduit, 30...air pressure signal channel, 40...check valve, 41...orifice, P10, P11, P20, P21...port

## Claims

1. An air supply circuit comprising:
a compressor (10; 10e) configured to selectively perform a load operation that sends out compressed air and an idle operation that does not send out the compressed air;
a desiccant (11a) configured to remove water from the compressed air sent out by the compressor (10; 10e);
an instruction unit (11e) configured to output a first signal indicating that the compressed air is unnecessary to the compressor (10; 10e);
a control valve (13; 11d; 17) arranged between the compressor (10; 10e) and the desiccant (11a) and configured to selectively switch to a connection position that connects the compressor (10; 10e) to the desiccant (11a) and a discharge position that disconnects the compressor (10; 10e) and the desiccant (11a) and connects the compressor (10; 10e) to a discharge port (23; 11f); and
a generation circuit (14, 15; 41) configured to generate a second signal based on the first signal and output the second signal to the control valve (13; 11d; 17), wherein
when the instruction unit (11e) outputs the first signal, the compressor (10; 10e) performs the idle operation in response to the first signal and the control valve (13; 11d; 17) is switched to the discharge position in response to the second signal, and
when the instruction unit (11e) stops the first signal, the compressor (10; 10e) performs the load operation in response to the stopping of the first signal and the control valve (13; 11d; 17) is switched to the connection position after delay of a predetermined time from when the first signal is stopped.

2. The air supply circuit according to claim 1, wherein the control valve (17) is connected to a location between the compressor (10) and the desiccant (11a) and is configured to selectively switch to the connection position that connects the compressor (10) to the desiccant (11a) so as to supply the compressed air to the desiccant (11a) and the discharge position that connects the compressor (10) to the discharge port (23) so as not to supply the compressed air to the desiccant (11a).

3. The air supply circuit according to claim 1, wherein the first signal is an air pressure signal and the second signal is an air pressure signal.

4. The air supply circuit according to claim 3, wherein the generation circuit (14, 15) includes an orifice (15) and a volume chamber (14) arranged between the orifice (15) and the control valve (13; 17).

5. The air supply circuit according to claim 4, wherein the orifice (15) is connected in parallel with a check valve (16) that allows air to flow in a direction from the instruction unit (11e) toward the volume chamber (14).

6. The air supply circuit according to claim 4 or 5, wherein
the desiccant (11a) and the instruction unit (11e) are arranged in an air-drying device (11), and
the generation circuit (14, 15) and the control valve (13; 17) are arranged between the compressor (10) and the air-drying device (11).

7. The air supply circuit according to claim 3, wherein the generation circuit (41) includes an orifice (41) and a check valve (40) that is connected in parallel with the orifice (41) and allows air to flow in a direction from the instruction unit (11e) toward the control valve (11d).

8. The air supply circuit according to any one of claims 1 to 5 and 7, wherein the desiccant (11a), the instruction unit (11e), the generation circuit (41), and the control valve (11d) are arranged in an air-drying device (11).
New claim set for Entry into European Phase replacing all previous claims

9. The air supply circuit according to claim 8, wherein
the air-drying device (11) includes a discharge valve (11d) that discharges air that has passed through the desiccant (11a) in a direction from the desiccant (11a) toward the compressor (10; 10e) when regenerating the desiccant (11a), and
the air-drying device (11) uses the discharge valve (11d) as the control valve (11d).

10. The air supply circuit according to any one of claims 1 to 9, wherein the predetermined time is set to be longer than or equal to a period of time that is necessary for discharging compressed air, which is sent out from the compressor (10; 10e) immediately after the compressor (10; 10e) shifts from the idle operation to the load operation, from the discharge port (23; 11f).

## Patentansprüche

1. Luftzuführungskreis, umfassend:
einen Kompressor (10, 10e), der konfiguriert ist, um wahlweise einen Lastbetrieb auszuführen, der Druckluft aussendet und einen Leerlaufbetrieb, der die Druckluft nicht aussendet;
ein Trocknungsmittel (11a), das konfiguriert ist, um Wasser aus der von dem Kompressor (10, 10e) ausgesendeten Druckluft zu entfernen;
eine Befehlseinheit (11e), die konfiguriert ist, um ein erstes Signal an den Kompressor (10, 10e) auszugeben, das angibt, dass die Druckluft unnötig ist;
ein Steuerungsventil (13, 11d, 17), das zwischen dem Kompressor (10, 10e) und dem Trocknungsmittel (11a) angeordnet ist und konfiguriert ist, um wahlweise zu einer Verbindungsposition, die den Kompressor (10, 10e) mit dem Trocknungsmittel (11a) verbindet und einer Entladeposition zu schalten, die den Kompressor (10, 10e) und das Trocknungsmittel (11a) trennt und den Kompressor (10, 10e) mit einer Entladeöffnung (23, 11f) verbindet, und
eine Erzeugungsschaltung (14, 15, 41), die konfiguriert ist, um ein zweites Signal basierend auf dem ersten Signal zu erzeugen und das zweite Signal an das Steuerungsventil (13, 11d, 17) auszugeben, wobei
wenn die Befehlseinheit (11e) das erste Signal ausgibt, der Kompressor (10, 10e) den Leerlaufbetrieb in Reaktion auf das erste Signal ausführt und das Steuerungsventil (13, 11d, 17) zu der Entladeposition in Reaktion auf das zweite Signal geschaltet wird, und
wenn die Befehlseinheit (11e) das erste Signal stoppt, der Kompressor (10, 10e) den Lastbetrieb in Reaktion auf das Stoppen des ersten Signals ausführt und das Steuerungsventil (13, 11d, 17) zu der Verbindungsposition nach Verzögerung einer vorgegebenen Zeit ab dem Stoppen des ersten Signals geschaltet wird.

2. Der Luftzuführungskreis nach Anspruch 1, wobei das Steuerungsventil (17) an einer Stelle zwischen dem Kompressor (10) und dem Trocknungsmittel (11a) angeschlossen ist und konfiguriert ist, um wahlweise zu der Verbindungsposition, die den Kompressor (10) mit dem Trocknungsmittel (11a) verbindet, um die Druckluft dem Trocknungsmittel (11a) zuzuführen und der Entladeposition zu schalten, die den Kompressor (10) mit der Entladeöffnung (23) verbindet, um die Druckluft nicht dem Trocknungsmittel (11a) zuzuführen.

3. Der Luftzuführungskreis nach Anspruch 1, wobei das erste Signal ein Luftdrucksignal ist und das zweite Signal ein Luftdrucksignal ist.

4. Der Luftzuführungskreis nach Anspruch 3, wobei die Erzeugungsschaltung (14, 15) eine Drossel (15) und eine Volumenkammer (14) umfasst, die zwischen der Drossel (15) und dem Steuerungsventil (13, 17) angeordnet ist.

5. Der Luftzuführungskreis nach Anspruch 4, wobei die Drossel (15) parallel zu einem Rückschlagventil (16) angeschlossen ist, welches zulässt, dass Luft in einer Richtung von der Befehlseinheit (11e) in Richtung der Volumenkammer (14) strömt.

6. Der Luftzuführungskreis nach Anspruch 4 oder 5, wobei
das Trocknungsmittel (11a) und die Befehlseinheit (11e) in einer Lufttrocknungsvorrichtung (11) angeordnet sind, und
die Erzeugungsschaltung (14, 15) und das Steuerungsventil (13, 17) zwischen dem Kompressor (10) und der Lufttrocknungsvorrichtung (11) angeordnet sind.

7. Der Luftzuführungskreis nach Anspruch 3, wobei die Erzeugungsschaltung (41) eine Drossel (41) umfasst und ein Rückschlagventil (40), das parallel zu der Drossel (41) angeschlossen ist und zulässt, dass Luft in eine Richtung von der Befehlseinheit (11e) in Richtung des Steuerungsventils (11d) strömt.

8. Der Luftzuführungskreis nach einem der Ansprüche 1 bis 5 und 7, wobei das Trocknungsmittel (11a), die Befehlseinheit (11e), die Erzeugungsschaltung (41) und das Steuerungsventil (11d) in einer Lufttrocknungsvorrichtung (11) angeordnet sind.

9. Der Luftzuführungskreis nach Anspruch 8, wobei
die Lufttrocknungsvorrichtung (11) ein Ablassventil (11d) umfasst, welches bei Regeneration des Trocknungsmittels (11a) Luft, die durch das Trocknungsmittel (11a) geströmt ist, in einer Richtung von dem Trocknungsmittel (11a) in Richtung des Kompressors (10, 10e) ablässt, und
die Lufttrocknungsvorrichtung (11) das Ablassventil (11d) als das Steuerungsventil (11d) verwendet.

10. Der Luftzuführungskreis nach einem der Ansprüche 1 bis 9, wobei die vorgegebene Zeit so festgelegt ist, dass sie länger als oder gleich einem Zeitraum ist, der notwendig ist, um Druckluft, die von dem Kompressor (10, 10e) unmittelbar nachdem der Kompressor (10, 10e) von dem Leerlaufbetrieb zu dem Lastbetrieb übergeht ausgesendet wird, aus der Auslassöffnung (23, 11f) zu entlassen.

## Revendications

1. Circuit d'alimentation d'air, comprenant :
un compresseur (10 ; 10e) configuré pour mettre en œuvre sélectivement un fonctionnement de charge qui envoie de l'air comprimé, et un fonctionnement inactif qui n'envoie pas d'air comprimé ;
un absorbeur d'humidité (11a) configuré pour éliminer l'eau de l'air comprimé envoyé par le compresseur (10 ; 10e) ;
une unité de commande (11e) configurée pour émettre un premier signal indiquant que l'air comprimé n'est pas nécessaire pour le compresseur (10 ; 10e) ;
une vanne de contrôle (13 ; 11d ; 17) agencée entre le compresseur (10 ; 10e) et l'absorbeur d'humidité (11a) et configurée pour commuter sélectivement vers une position de connexion qui connecte le compresseur (10 ; 10e) à l'absorbeur d'humidité (11a) et vers une position de décharge qui déconnecte le compresseur (10 ; 10e) et l'absorbeur d'humidité (11a) et connecte le compresseur (10 ; 10e) à un orifice de décharge (23 ; 11f) ; et
un circuit de génération (14, 15 ; 41) configuré pour générer un deuxième signal sur la base du premier signal et pour envoyer le deuxième signal à la vanne de contrôle (13 ; 11d ; 17), dans lequel
quand l'unité de commande (11e) envoie le premier signal, le compresseur (10 ; 10e) met en œuvre le fonctionnement inactif en réponse au premier signal, et la vanne de contrôle (13 ; 11d ; 17) est commutée à la position de décharge en réponse au deuxième signal, et
quand l'unité de commande (11e) arrête le premier signal, le compresseur (10 ; 10e) met en œuvre le fonctionnement de charge en réponse à l'arrêt du premier signal, et la vanne de contrôle (13 ; 11d; 17) est commutée à la position de connexion après un délai d'un temps prédéterminé à partir du moment où le premier signal est arrêté.

2. Circuit d'alimentation d'air selon la revendication 1, dans lequel la vanne de contrôle (17) est connectée à un emplacement situé entre le compresseur (10) et l'absorbeur d'humidité (11a), et est configurée pour passer sélectivement à la position de connexion qui connecte le compresseur (10) à l'absorbeur d'humidité (11a) de manière à fournir l'air comprimé à l'absorbeur d'humidité (11a) et à la position de décharge qui connecte le compresseur (10) à l'orifice de décharge (23) de manière à ne pas fournir l'air comprimé à l'absorbeur d'humidité (11a).

3. Circuit d'alimentation d'air selon la revendication 1, dans lequel le premier signal est un signal de pression d'air et le deuxième signal est un signal de pression d'air.

4. Circuit d'alimentation d'air selon la revendication 3, dans lequel le circuit de génération (14, 15) comprend un orifice (15) et une chambre volumique (14) agencée entre l'orifice (15) et la vanne de contrôle (13 ; 17).

5. Circuit d'alimentation d'air selon la revendication 4, dans lequel l'orifice (15) est connecté en parallèle à un clapet anti-retour (16) qui permet à l'air de s'écouler dans une direction allant de l'unité de commande (11e) à la chambre volumique (14).

6. Circuit d'alimentation d'air selon la revendication 4 ou 5, dans lequel
l'absorbeur d'humidité (11a) et l'unité de commande (11e) sont agencés dans un dispositif de séchage d'air (11), et
le circuit de génération (14, 15) et la vanne de contrôle (13 ; 17) sont agencés entre le compresseur (10) et le dispositif de séchage d'air (11).

7. Circuit d'alimentation d'air selon la revendication 3, dans lequel le circuit de génération (41) comprend un orifice (41) et un clapet anti-retour (40) qui est connecté en parallèle à l'orifice (41) et permet à l'air de s'écouler dans une direction allant de l'unité de commande (11e) à la vanne de contrôle (11d).

8. Circuit d'alimentation d'air selon l'une quelconque des revendications 1 à 5 et 7, dans lequel l'absorbeur d'humidité (11a), l'unité de commande (11e), le circuit de génération (41) et la vanne de contrôle (lld) sont agencés dans un dispositif de séchage d'air (11).

9. Circuit d'alimentation d'air selon la revendication 8, dans lequel
le dispositif de séchage d'air (11) comprend une vanne de décharge (lld) qui évacue l'air qui a traversé l'absorbeur d'humidité (11a) dans une direction allant de l'absorbeur d'humidité (11a) au compresseur (10 ; 10e) lors de la régénération de l'absorbeur d'humidité (11a), et
le dispositif de séchage d'air (11) utilise la vanne de décharge (lld) comme vanne de contrôle (11d).

10. Circuit d'alimentation d'air selon l'une quelconque des revendications 1 à 9, dans lequel le temps prédéterminé est réglé pour être supérieur ou égal à une période nécessaire pour évacuer l'air comprimé, qui est envoyé par le compresseur (10 ; 10e) immédiatement après que le compresseur (10 ; 10e) passe du fonctionnement inactif au fonctionnement de charge, depuis l'orifice de décharge (23 ; 11f).
